# NEW EUROPEAN PATENT SPECIFICATION

(11) **EP 1 967 438 B3**
(45) Date of publication of this specification: **13.03.2019**
(45) Mention of the grant of the patent: 29.01.2014
(21) Application number: 07115810.9
(22) Date of filing: 06.09.2007
(51) Int. Cl.: B62B 5/00, B62B 1/12, B62B 1/14

(54) **Transport aid with attachment**
Transporthilfe mit Anhänger
Accessoire pour le transport avec fixation

(30) Priority: 06.09.2006 NL 2000215
(43) Date of publication of application: 10.09.2008
(73) Proprietor: Movexx International B.V., 3903 LH Veenendaal (NL)
(72) Inventor: Van Vlastuin, Hendrik, 3904 KN Veenendaal (NL)
(74) Representative: Nederlandsch Octrooibureau

(56) References cited:
- WO-A-2005/042332
- DE-A1- 10 158 201
- DE-A1-102004 034 195
- DE-C- 819 671
- GB-A- 2 392 417
- NL-A- 9 301 202
- US-A- 6 062 328
- US-A1- 2004 256 818
- US-A1- 2005 110 232
- US-B1- 6 467 780

## Description

### Background of the invention

The invention relates to a transport aid as defined by claim 1, in particular a multi-use transport aid which requires little operating force. This transport aid can be used, for example, to push or pull market trolleys, trolleys which are used to stack shelves, and the like.

Numerous transport aid means are known, for example from DE102004034195 A1, US2005/110232 A1, DE819671C, US2004/256818, DE20018773, US6467780 and WO2005/042332. NL9301202 describes a means of assistance for moving chairs or boxes. One drawback of this transport aid means is the fact that it makes use simply of the strength of an operator; in this respect, account needs to be taken of a wide diversity between the strength of operators. A further drawback is that this transport aid means is only suitable for attaching to a specific type of load.

Furthermore, there are known motor-driven trucks for pulling one or more trolleys, as are used for example at airports. One drawback of these trucks is that they are often relatively large and therefore not very viable for situations in which there is little manoeuvring space.

US6,062,328 A, which discloses all the features of the preamble of claim 1, discloses an electrically driven transport aid with a fixed carrier, which has the drawback that changing the type of carrier is very laborious. Moreover, the transport aid known from said publication is not suitable as a pushing aid.

Furthermore, there are known trolleys for specifically moving pallets. These trolleys, which are mostly hand-driven, are also relatively large and, furthermore, only adapted for use in combination with pallets.

### Summary of the invention

It is an object of the invention to solve at least some of the problems that have been outlined and/or to offer an alternative to existing transport aid means and to allow them to become more versatile in use.

To this end, the invention provides a transport aid, in particular a transport aid comprising a chassis provided with at least two wheels and at least one support point, an upright a frame supported on the chassis, an electric drive having a battery and an electric motor that is drive-connected to at least one of the wheels, a manual operation console on the frame provided with one or more operating members for actuating the electric drive, and a carrier which is connected to the frame by a suspension means and defines a load-bearing surface. The result is a transport aid that is versatile in use and is able both to move independent transport means and to act for example as a hand truck. Moreover, the use of the electric drive relieves the load on the operator, meaning that only a low operating force is required, which can be provided by virtually any operator. This allows more flexible use of operators, leading to increased motivation and productivity. Relieving the load on the operator also helps to comply with legislation relating to working conditions.

According to the invention the manual operation console is pivotably secured at the top side of the frame.

In a further embodiment, the carrier is releasably connected to the suspension means, with the result that the transport aid is easier to use as a pushing or pulling aid. This releasability makes it possible to quickly and easily change carrier in order to allow a carrier that is specifically suitable for a particular load to be connected to the suspension means of the transport aid.

According to the invention, the carrier is displaceable with respect to the upright frame. In particular the height of the carrier is adjustable with respect to the upright frame, by means of a first adjustment element. This allows connection to a large number of types of loads for them then to be moved.

According to the invention the upright frame is pivotably secured to the chassis, and in particular the upright frame can be tilted with respect to the chassis by means of a second adjustment element. A first advantage of this is that the load can be more stably supported. Another advantage is the possibility of setting a suitable tilt angle when the load is being picked up and put down. Furthermore, by tilting the frame it is possible to adapt the operation of the transport aid to a particular operator.

In a further embodiment of the transport aid, one or more adjustment elements preferably comprises an electric drive. This will relieve the load on the operator still further and improves the handling of the transport aid.

In a further not claimed embodiment of the transport aid, the carrier is provided with a retaining part that extends upwards from the carrier, with the result that a load can be held stably on the load-bearing surface defined by the carrier.

In a further embodiment of the transport aid, the load-bearing surface is a platform. One advantage of this is that in this embodiment the transport aid can be used, for example, as a hand truck.

In a further embodiment of the transport aid, the load-bearing surface is a fork, allowing better connection of the transport aid to certain loads.

In a further embodiment of the transport aid, the support point is designed as a castor. As a result, the transport aid can be placed in a stable at-rest position, and in operation friction is avoided in the event of contact between the support point and the ground.

In a preferred embodiment, the transport aid comprises a control unit which can be used to set parameters such as acceleration, braking distance, forward speed, reverse speed and traction force. This measure allows the transport aid to be adapted to the personal wishes of the operator and also conditions such as the weight of the load and the presence of slopes over the path that is to be covered.

In a further embodiment of the transport aid, the centre of gravity of the battery is aligned above one or more wheels, thereby improving the handling of the transport aid.

In a further not claimed embodiment of the transport aid, there is an electrical coupling piece, wherein at least one coupling piece part is connected to the battery. The coupling piece allows simple and fast connection of the battery to the electric drive or, for example, a charging device. This prevents unnecessary time loss.

In a further not claimed embodiment of the transport aid, the battery is removable, such that the battery can be removed by means of a substantially rectilinear movement. This has the advantage that for a very heavy job it is possible to use a replacement battery, thereby eliminating unnecessary waiting time.

In a further embodiment of the transport aid, a set of carriers are provided, each provided with securing parts that interact with the suspension means on the frame so as to be removably secured to the frame, the set of carriers comprising a carrier provided with a load-bearing platform and a carrier provided with a fork, with the pieces of the fork defining a load-bearing surface.

Further aspects of the invention are described in the dependent claims and in the description of the figures which follows. The various aspects described therein may each separately form part of any divisional patent applications taken from the present patent application, and can also be combined with one another.

### Brief description of the figures

The invention will now be explained in more detail with reference to the accompanying figures, wherein:
Figure 1 shows a perspective view of a transport aid provided with a carrier.
Figure 2 shows a perspective view of a transport aid with removed carrier.
Figure 3 shows a side view of a detail of the way in which a carrier is secured to a transport aid.
Figure 4 shows a cross-sectional side view of an upright frame.
Figure 5 shows a side view of a further embodiment.

### Detailed description of the figures

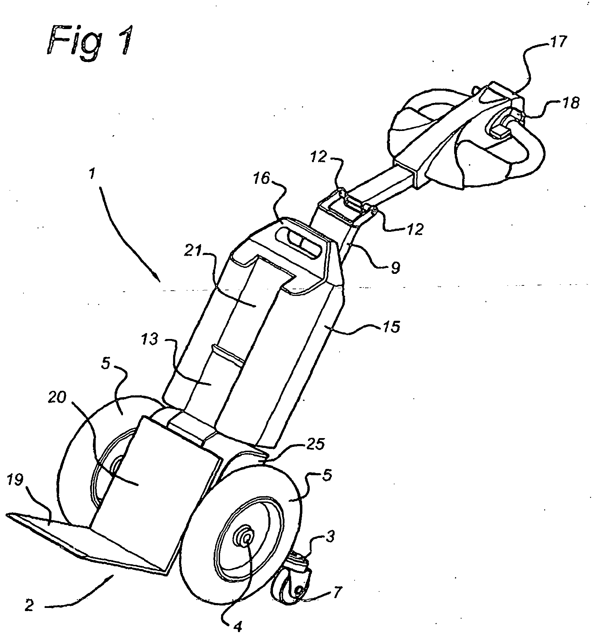

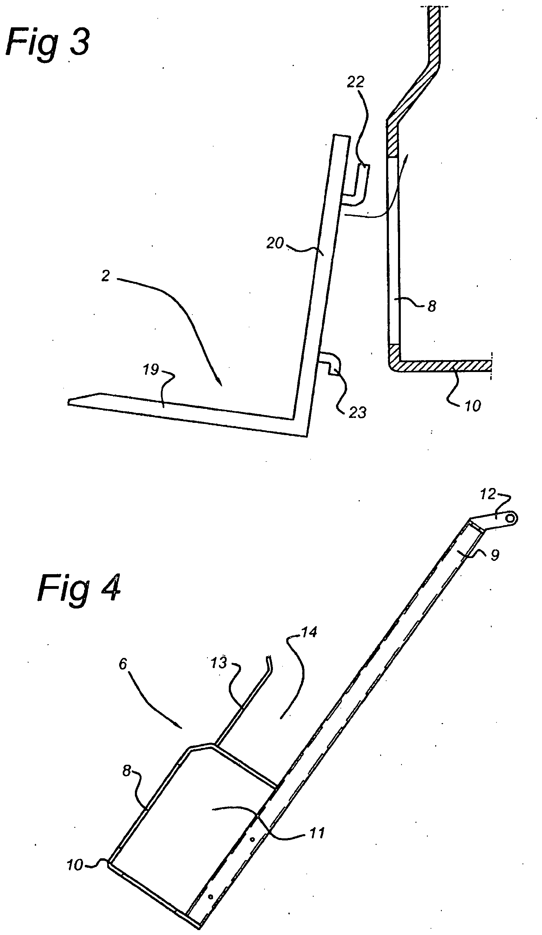

Figure 1 shows an embodiment of a transport aid 1 provided with a carrier 2. The transport aid 1 comprises a chassis 3 provided, by means of an axle 4, with two wheels 5, and also provided with a support point 7 which is designed as a castor. The support point 7 is required in order, in conjunction with the wheels, to allow the transport aid to be placed in a stable at-rest position when it is not in use. In a further embodiment, the support point 7 may also be designed as a projection which extends from the chassis towards the surface on which the transport aid 1 is placed. A frame 6 as shown in Figure 4 is secured on the chassis 3. The frame 6 is preferably secured pivotably about the axle 4 to which the two wheels 5 are secured. In a further embodiment, the frame 6 can be secured to the chassis 3 in numerous other ways known to a person skilled in the art.

Referring now to Figure 4, the frame 6 is preferably made from metal using techniques such as for example welding and setting. The frame 6 comprises an upright rectangular box section 9. A U-section 10 is attached to the underside of the box section 9, with the open side facing towards the box section 9, resulting in the formation of a motor compartment 11. Preferably an electric drive and a control unit are secured in this motor compartment 11, although neither is shown. The control unit is preferably provided with a connection which can be used to set external parameters, such as acceleration, braking distance, forward speed, reverse speed and traction force. At the top side, the box section 9 is provided with securing means 12, such as a hinge. The U-section 10 is provided, on the side lying opposite the box section 9, with recesses 8 intended to interact with the carrier 2 from Figure 1. Furthermore, the U-section 10 is provided on the top side with a plate 13 that is substantially parallel to the box section 9 and at a distance therefrom which is such that a receiving space 14 is formed. A battery assembly 15 from Figure 1 can be placed in the receiving space 14, supported on one side of the U-section 10 and held in place by the box section 9 and plate 13.

In Figure 1, the battery assembly 15 is also provided with a guide groove 21 in which plate 13 engages. On the top side of battery assembly 15 a handle 16 is provided, by means of which the battery assembly 15 can be removed using a substantially vertical movement. A manual operation console 17 is pivotably secured to the securing means 12 at the top side of the box section 9. The combination of the tiltability of the frame 6 and the pivoting attachment of the manual operation console 17 offers the advantage that the position of the manual operation console 17 can be optimally adapted to the operator's wishes. This manual operation console 17 preferably comprises one or more operating members 18 which are electrically connected to the control unit in motor compartment 11. The operator of the transport aid 1, by means of the one or more operating members 18, can for example move the transport aid 1 forwards or in reverse as desired. In addition, it is possible to set the speed using the one or more operating members 18.

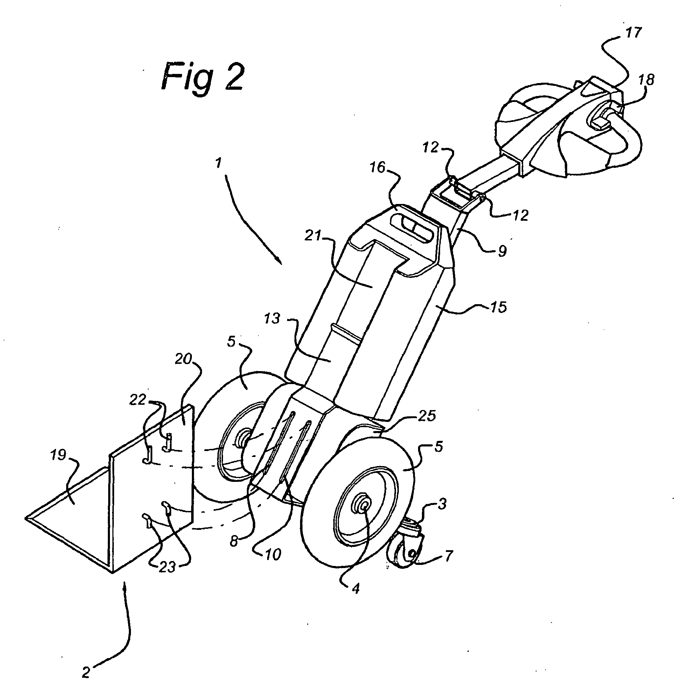

Figure 2 shows a carrier 2, provided with a platform 19 and a supporting part 20, with the result that a load can easily be held in place by the upright frame being tilted slightly towards the operator. As a result, the load rests stably on both the platform 19 and against the supporting part 20. The carrier 2 is secured to the upright frame by a suspension means which is formed by two upper hooks 22 and two lower hooks 23, which interact with the recesses 8 in the U-section 10. This suspension means comprising upper hooks 22 and lower hooks 23 and recess 8 results in a form of suspension which allows a rapid change of carrier, thereby enhancing the utility and versatility of the transport aid. It is also conceivable for carrier 2 to be fixed in recess 8 by means of bolts, preferably quick-release bolts, thereby allowing quick adjustment of the height of the carrier 2 and quick change between carriers.

Figure 3 shows a detailed example of how the carrier is suspended from the upright frame. First of all, the upper hooks 22 are as far as possible hooked in at the top edge of the recesses 8 in the U-section 10. It is then possible for the lower hooks 23 to be hooked in at the bottom edge of the recesses 8 in the U-section 10. The length of the upper hooks 22 means that they continue to be engaged behind U-section 10.

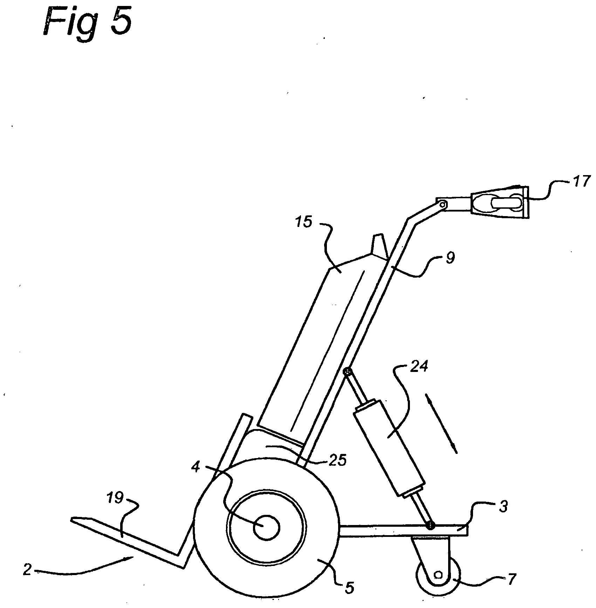

Figure 5 shows a further embodiment that is provided with an adjustment element 24. This adjustment element 24 preferably comprises an electric drive and is used to tilt the frame 6 from Figure 4 with respect to chassis 3. For this purpose, the ends of adjustment element 24 are pivotably secured to both the frame 6 and the chassis 3.

A releasable carrier 2 is provided with a gripper part. By means of the gripper part, the transport aid 1 can be connected for example to a transport trolley in order to pull the latter. The gripper part here has two hooks which are open at the top and are specifically intended to hook behind the edge of a transport trolley. As a result, the transport aid can very easily be made suitable for moving transport trolleys as are in widespread use in supermarket supply systems.

To improve handling, the gripper part is pivotably secured to a suspension part of the carrier, so that the carrier 2 can be easily secured to a corresponding suspension part 8, 10 of the frame 6 of the transport aid. Here, carrier 2 has a rod which at one end is provided with hooks and at another end a hinge, by means of which the rod is pivotably connected to the suspension part. The easy-change property of the carrier makes the transport aid very easy to use both for transporting transport trolleys for bottle crates for example, and also for transporting pallets. The hinge allows the hooks to pivot in the horizontal plane, allowing better control of the load that is to be transported. In one not claimed embodiment, the hinge is prestressed by means of a spring, which forces the hooks into a preferred position in order to facilitate attachment to a transport trolley.

By virtue of its nature, as shown, the transport aid is suitable for both pulling and pushing transport. The easily removable carrier with a suspension part that interacts with a suspension part on the frame allows carriers to be changed quickly, making the transport aid versatile in use for pulling and pushing transport. The angle adjustment by means of adjustment element 24 and the swivelling manual actuation console 17 also make a contribution in this respect. The angle adjustment 24, for example, allows the hooks to be hooked behind the edge of the transport trolley.

It will be clear that further variants of the embodiments described above are conceivable and obvious to a person skilled in the art on the basis of the present description. Such embodiments are likewise covered by the scope of protection of the following claims.

## Claims

1. Transport aid (1) for pushing or pulling trolleys, comprising a chassis (3) provided with two wheels (5) and at least one support point (7), an upright frame (6) supported on the chassis (3), wherein the frame (6) is pivotably secured to the chassis (3), an electric drive having a battery (15) and an electric motor that is drive-connected to at least one of the wheels (5), a manual operation console (17) on the frame (6) provided with one or more operating members (18) for actuating the electric drive (25), a carrier (2) which is connected to the frame (6) by a suspension means (8, 10, 22, 23) and defines a load-bearing surface (19), **characterized in that** the carrier (2) is displaceable with respect to the upright frame (6), and **in that** the manual operation console is pivotably secured at the top side of the frame.

2. Transport aid according to Claim 1, wherein the carrier (2) is releasably connected to the suspension means (8, 10, 22, 23).

3. Transport aid according to one or more of the preceding claims, wherein the height of the carrier (2) is adjustable with respect to the upright frame (6) by means of a first adjustment element.

4. Transport aid according to one or more of the preceding claims, wherein the frame (6) can be tilted with respect to the chassis (3) by means of a second adjustment element (24).

5. Transport aid according to one or more of the preceding claims, wherein at least one adjustment element (24) comprises an electric drive.

6. Transport aid according to one or more of the preceding claims, wherein a support point is at least one castor (7).

7. Transport aid according to one or more of the preceding claims, wherein a control unit is provided and can be used to set parameters such as acceleration, braking distance, forward speed, reverse speed and traction force.

8. Transport aid according to one or more of the preceding claims, wherein the centre of gravity of the battery (15) is aligned above one or more wheels (5).

9. Transport aid according to one or more of the preceding claims, wherein the frame (6) comprises a first suspension part (8, 10) and the carrier (2) comprises a second suspension part (22, 23) for in cooperation releasably connecting the carrier (2) to the frame (6).

10. Transport aid according to Claim 9, wherein the carrier (2) at one end is provided with the second suspension part (32) and at another end is provided with gripper parts (31) for gripping an edge of a trolley, the gripper parts preferably being pivotably connected to the second suspension part, disposed so as to allow pivoting in the plane that is horizontal in use.

11. Transport aid according to one or more of the preceding claims, comprising a set of carriers which are each provided with securing parts (22, 23) that interact with the suspension means (8, 10, 22, 23) on the frame (6) in order to allow them to be removably secured to the frame (6), wherein the set of carriers comprises a carrier (2) provided with a load-bearing platform (19) and a carrier provided with a fork, with the fork parts defining a load-bearing surface.

12. Carrier, intended and suitable for use for a transport aid according to one of the preceding claims, in combination with a transport aid comprising a chassis (3) provided with at least two wheels (5) and at least one support point (7), a frame (6) supported on the chassis (3), an electric drive having a battery (15) and an electric motor that is drive-connected to at least one of the wheels (5), a manual operation console (17) on the frame (6) provided with one or more operating members (18) for actuating the electric drive (25),
wherein the frame comprises a first suspension part (8, 10) and wherein the carrier (2) defines a load-bearing surface (19) and is at one end provided with a second suspension part (22, 23) for, in cooperation with the first suspension part, releasably connecting the carrier (2) to the frame (6), and at the other end is provided with gripper parts for gripping an edge of a trolley, the gripper parts being pivotably connected to the second suspension part, so as to allow pivoting in the plane that is horizontal in use.

## Patentansprüche

1. Transporthilfe (1) zum Schieben oder Ziehen von Handwagen, mit einem Gestell (3), welches mit zwei Rädern (5) und zumindest einem Stützpunkt (7) versehen ist, einem aufrechten Rahmen (6), welcher auf das Gestell (3) gestützt ist, wobei der Rahmen (6) drehbar an dem Gestell (3) gesichert ist, einem elektrischen Antrieb mit einer Batterie (15) und einem elektrischen Motor, welcher an zumindest einem der Räder (5) antriebsverbunden ist, einer manuellen Betriebskonsole (17) auf dem Rahmen (6), welche mit einem oder mehreren Betriebselementen (18) zum Betätigen des elektrischen Antriebes (25) versehen ist, einem Träger (2), welcher mit dem Rahmen (6) durch eine Aufhängeeinrichtung (8, 10, 22, 23) verbunden ist und eine lasttragende Oberfläche (19) definiert, **gekennzeichnet dadurch, dass** der Träger (2) in Bezug zu dem aufrechten Rahmen (6) verstellbar ist, und dadurch, dass die manuelle Betriebskonsole drehbar an der Oberseite des Rahmens gesichert ist.

2. Transporthilfe nach Anspruch 1, wobei der Träger (2) lösbar mit der Aufhängeeinrichtung (8, 10, 22, 23) verbunden ist.

3. Transporthilfe nach einem oder mehreren der vorstehenden Ansprüche, wobei die Höhe des Trägers (2) in Bezug zu dem aufrechten Rahmen (6) mittels eines erstens Einstellelementes einstellbar ist.

4. Transporthilfe nach einem oder mehreren der vorstehenden Ansprüche, wobei der Rahmen (6) in Bezug zu dem Gestell (3) durch ein zweites Einstellelement (24) geneigt werden kann.

5. Transporthilfe nach einem oder mehreren der vorstehenden Ansprüche, wobei zumindest ein Einstellelement (24) einen elektrischen Antrieb umfasst.

6. Transporthilfe nach einem der mehreren der vorstehenden Ansprüche, wobei ein Stützpunkt zumindest eine Rolle (7) ist.

7. Transporthilfe nach einem oder mehreren der vorstehenden Ansprüche, wobei eine Steuereinheit bereitgestellt ist und zum Einstellen von Parametern wie Beschleunigung, Bremsabstand, Vorwärtsgeschwindigkeit, Rückwärtsgeschwindigkeit und Zugkraft verwendet werden kann.

8. Transporthilfe nach einem oder mehreren der vorstehenden Ansprüche, wobei der Schwerpunkt der Batterie (15) über einem oder mehreren Rädern (5) angeordnet ist.

9. Transporthilfe nach einem oder mehreren der vorstehenden Ansprüche, wobei der Rahmen (6) ein erstes Aufhängeteil (8, 10) umfasst und der Träger (2) ein zweites Aufhängeteil (22, 23) umfasst, um bei Zusammenwirkung den Träger (2) mit dem Rahmen (6) lösbar zu verbinden.

10. Transporthilfe nach Anspruch 9, wobei der Träger (2) an einem Ende mit dem zweiten Aufhängeteil (32) versehen ist und an einem anderen Ende mit Griffteilen (31) zum Greifen einer Kante eines Handwagens versehen ist, wobei die Griffteile bevorzugt drehbar mit dem zweiten Aufhängeteil verbunden sind, derart angeordnet, um ein Drehen in der Ebene, welche horizontal in Verwendung ist, zu ermöglichen.

11. Transporthilfe nach einem oder mehreren der vorstehenden Ansprüche, mit einem Satz von Trägern, welche jeweils mit Sicherungsteilen (22, 23) versehen sind, welche mit der Aufhängeeinrichtung (8, 10, 22, 23) auf dem Rahmen (6) wechselwirken, um diesen zu ermöglichen, abnehmbar an dem Rahmen (6) gesichert zu sein, wobei der Satz von Trägern einen Träger (2) umfasst, welcher mit einer lasttragenden Plattform (19) versehen ist und einem Träger, welcher mit einer Gabel versehen ist, wobei die Gabelteile eine lasttragende Oberfläche definieren.

12. Träger, welcher vorgesehen und geeignet ist zur Verwendung für eine Transporthilfe nach einem der vorstehenden Ansprüche, sowie eine Transporthilfe mit einem Gestell (3), welches mit zumindest zwei Rädern (5) und zumindest einem Stützpunkt (7) versehen ist, einem Rahmen (6), welcher auf das Gestell (3) gestützt ist, einem elektrischen Antrieb mit einer Batterie (15) und einem elektrischen Motor, welcher an zumindest einem der Räder (5) antriebsverbunden ist, einer manuellen Betriebskonsole (17) auf dem Rahmen (6), welche mit einem oder mehreren Betriebselementen (18) zum Betätigen des elektrischen Antriebes (25) versehen ist,
wobei der Rahmen eine erstes Aufhängeteil (8, 10) umfasst, und wobei der Träger (2) eine lasttragende Oberfläche (19) definiert und an einem Ende mit einem zweiten Aufhängeteil (22. 23) versehen ist, um in Verbindung mit dem ersten Aufhängeteil den Träger (2) lösbar mit dem Gestell (6) zu verbinden, und an dem anderen Ende mit Griffteilen zum Greifen einer Kante eines Handwagens versehen ist, wobei die Griffteile drehbar mit dem zweiten Aufhängeteil verbunden sind, um ein Drehen in der Ebene, welche bei Verwendung horizontal ist, zu ermöglichen.

## Revendications

1. Accessoire de transport (1) pour pousser ou tirer des chariots, comprenant un châssis (3) doté de deux roues (5) et d'au moins un point de support (7), un cadre vertical (6) supporté sur le châssis (3), dans lequel le cadre (6) est attaché en pivotement sur le châssis (3), un entraînement électrique ayant une batterie (15) et un moteur électrique qui est connecté en termes d'entraînement à l'une au moins des roues (5), une console de service manuelle (17) sur le cadre (6) dotée d'un ou plusieurs éléments de service (18) pour actionner l'entraînement électrique (25), un support (2) qui est connecté au cadre (6) par un moyen de suspension (8, 10, 22, 23) et définit une surface de support de charge (19), **caractérisé en ce que** le support (2) est déplaçable par rapport au cadre vertical (6), et **en ce que** la console de service manuelle est attachée en pivotement du côté supérieur du cadre.

2. Accessoire de transport selon la revendication 1, dans lequel le support (2) est connecté de manière détachable au moyen de suspension (8, 10, 22, 23).

3. Accessoire de transport selon l'une ou plusieurs des revendications précédentes, dans lequel la hauteur du support (2) est ajustable par rapport au cadre vertical (6) au moyen d'un premier élément d'ajustement.

4. Accessoire de transport selon l'une ou plusieurs des revendications précédentes, dans lequel le cadre (6) peut être basculé par rapport au châssis (3) au moyen d'un second élément d'ajustement (24).

5. Accessoire de transport selon l'une ou plusieurs des revendications précédentes, dans lequel au moins un élément d'ajustement (24) comprend un entraînement électrique.

6. Accessoire de transport selon l'une ou plusieurs des revendications précédentes, dans lequel un point de support est au moins une roulette orientable (7).

7. Accessoire de transport selon l'une ou plusieurs des revendications précédentes, dans lequel il est prévu une unité de commande qui peut être utilisée pour fixer des paramètres comme l'accélération, la distance de freinage, la vitesse en marche avant, la vitesse en marche arrière et la force de traction.

8. Accessoire de transport selon l'une ou plusieurs des revendications précédentes, dans lequel le centre de gravité de la batterie (15) est aligné au-dessus d'une ou plusieurs roues (5).

9. Accessoire de transport selon l'une ou plusieurs des revendications précédentes, dans lequel le cadre (6) comprend une première partie de suspension (8, 10) et le support (2) comprend une seconde partie de suspension (22, 23) pour connecter, en coopération, le support (2) de façon détachable sur le cadre (6).

10. Accessoire de transport selon la revendication 9, dans lequel le support (2) est doté à une extrémité de la seconde partie de suspension (32) et est doté à une autre extrémité de parties d'agrippement (31) pour agripper un bord d'un chariot, les parties d'agrippement étant de préférence connectées en pivotement à la seconde partie de suspension, disposées de manière à permettre un pivotement dans le plan qui est horizontal en utilisation.

11. Accessoire de transport selon l'une ou plusieurs des revendications précédentes, comprenant un groupe de supports qui sont dotés chacun de parties de fixation (22, 23) qui coopèrent avec les moyens de suspension (8, 10, 22, 23) sur le cadre (6) de manière à leur permettre d'être attachés de façon amovible sur le cadre (6), dans lequel le groupe de supports comprend un support (2) doté d'une plate-forme de support de charge (19) et un support doté d'une fourche, telle que les parties de la fourche définissent une surface de support de charge.

12. Support, destiné et approprié à l'utilisation pour un accessoire de transport selon l'une des revendications précédentes, en combinaison avec un accessoire de transport comprenant un chassis (3) doté d'au moins deux roues (5) et d'au moins un point de support (7), un cadre (6) supporté sur le chassis (3), un entraînement électrique ayant une batterie (15) et un moteur électrique qui est connecté en termes d'entraînement à l'une au moins des roues (5), une console de service manuelle (17) sur le cadre (6) dotée d'un ou plusieurs éléments de service (18) pour actionner l'entraînement électrique (25),
dans lequel le cadre comprend une première partie de suspension (8, 10) et dans lequel le support (2) définit une surface de support de charge (19) et est doté à une extrémité d'une seconde partie de suspension (22, 23) pour connecter, en coopération avec la première partie de suspension, le support (2) de façon détachable sur le cadre (6), et est doté à l'autre extrémité de parties d'agrippement pour agripper un bord d'un chariot, les parties d'agrippement étant connectées en pivotement à la seconde partie de suspension, de manière à permettre un pivotement dans le plan qui est horizontal en utilisation.
